# EUROPEAN PATENT APPLICATION

(11) **EP 2 390 795 A1**
(43) Date of publication of application: **30.11.2011**
(21) Application number: 10305574.5
(22) Date of filing: 31.05.2010
(51) Int. Cl.: G06F 17/30, H04N 1/32, G06F 3/01

(54) **Augmented reality video application**

(71) Applicant: Alcatel Lucent, 75007 Paris (FR)
(72) Inventor: Dufosse, Stéphane, 91620 Nozay (FR); Afonso, José, 78141 Velizy (FR); Lefebvre-Mazurel, Stéphane, 78141 Velizy (FR); Poupel, Olivier, 35000 Rennes (FR); Plasse, Stéphanie, 91620 Nozay (FR)
(74) Representative: Shamsaei Far, Hassan

(57) **Abstract**

A wireless user terminal, comprising:
a video camera;
a video display screen;
a transceiver configured to connect the user terminal to a server;
a memory in which an Augmented Reality client is embodied in executable form;
a GPS receiver;
a processor configured to retrieve location-specific content in response to location information from the GPS receiver; and
a processor configured to display, on the video display screen, under control of the Augmented Reality client, a composite image including real-time video output from the video camera superimposed with additional media images that are responsive to the retrieved location-specific content;
wherein the location-specific content processor is configured to retrieve content, via the transceiver, from a server.

## Description

### Field of the Invention

There is currently no real immediate and direct link between what you see in the real world and existing enriched contents related. There are some solutions as flash code and some augmented reality reader.
But there are no official standard AR readers. Current solutions are uneasy, not user-friendly and not compatible.
There is currently no possibility for the users to post content by themselves.

### Background

Many Augmented Reality applications are already available (especially location-based ones).

Each mobile AR advertising campaign done needs to download a specific software each time (one shot campaign).

There are no official standard AR readers. Current solutions are uneasy, not user friendly and not compatible.

There is currently no possibility for the users to post content by themselves (key for usage creation).

As seen with the Iphone®, the success of the AR applications will go through content richness, usability, immediacy, easiness, look & feel.

### Description of the Embodiments

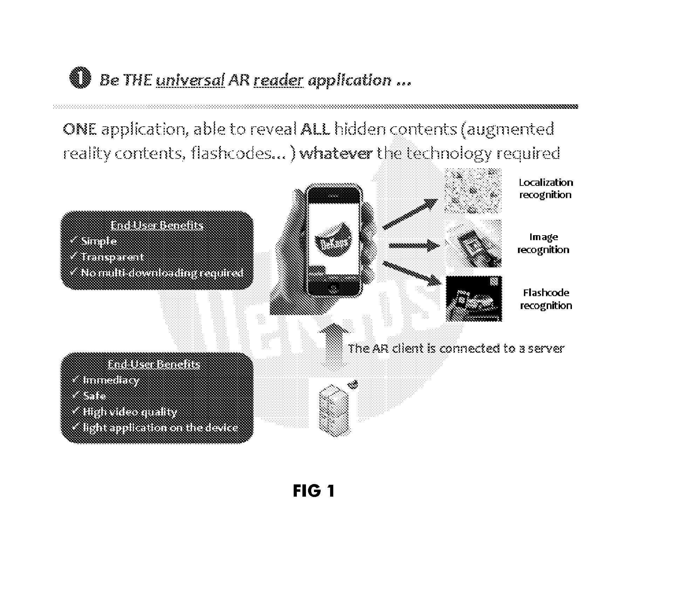

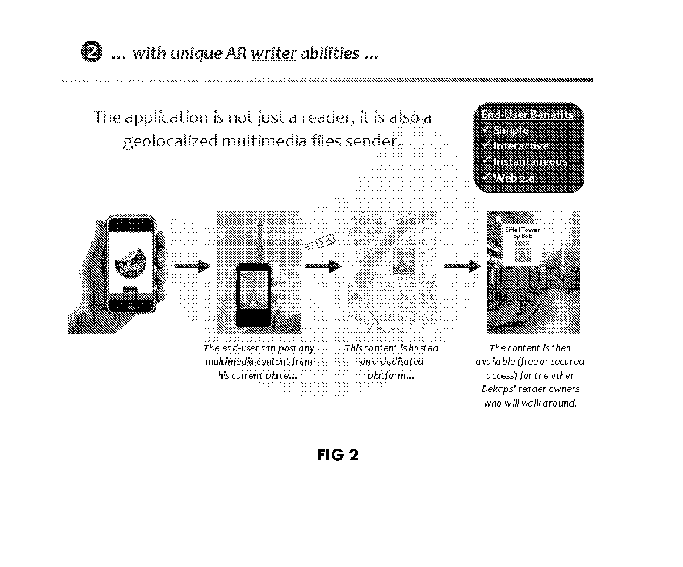

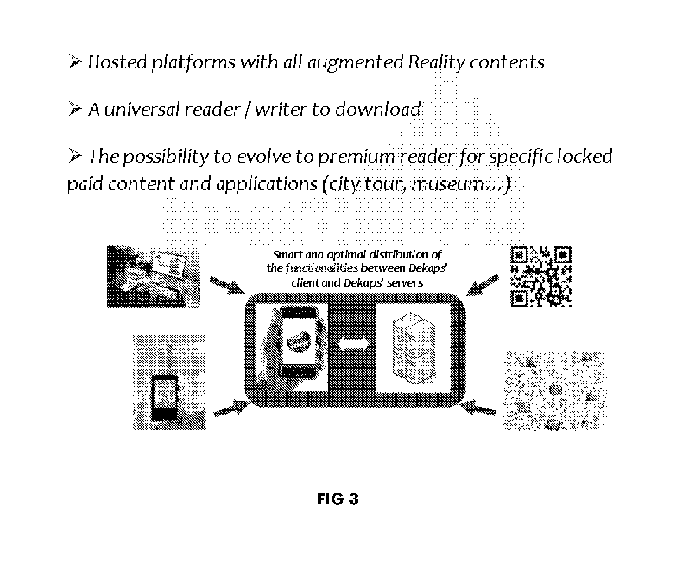

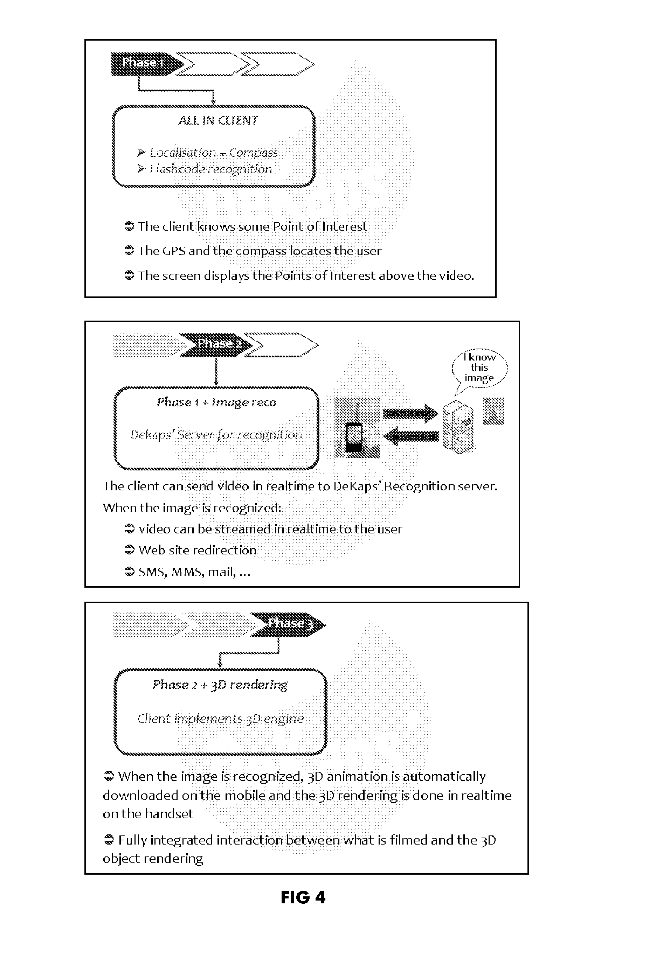

In the following, a method according to the invention is elucidated by way of examples, referencing figures 1, 2, and 3.

We propose a unique AR application which owns two key assets:
- be a universal AR reader: ONE application, able to read ALL augmented reality contents, whatever the technology required (which is not the case today)
- be also an innovative AR writer: users could post contents by themselves (this would be a world premiere and in perfect line with the Web 2.0 trend)

### Be the universal AR reader with unique writer capabilities

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless user terminal, comprising:
a video camera;
a video display screen;
a transceiver configured to connect the user terminal to a server;
a memory in which an Augmented Reality client is embodied in executable form;
a GPS receiver;
a processor configured to retrieve location-specific content in response to location information from the GPS receiver; and
a processor configured to display, on the video display screen, under control of the Augmented Reality client, a composite image including real-time video output from the video camera superimposed with additional media images that are responsive to the retrieved location-specific content;
wherein the location-specific content processor is configured to retrieve content, via the transceiver, from a server.

2. The user terminal of claim 1, further comprising a processor configured to stream the real-time video camera output to a server via the transceiver and to receive, from said server, streamed content that depends on recognition by the server of images in the real-time video stream.

3. The user terminal of claim 2, wherein the streaming processor is further configured to stream the displayed output and superimposed images to other users.

4. The user terminal of claim 2, further comprising a processor configured to render, in real time, 3D animation received by the streaming processor via the transceiver, and wherein the display processor is configured to superimpose the 3D rendering with the video camera output, thereby to provide a real-time composite display.
